# EUROPEAN PATENT APPLICATION

(11) **EP 1 669 251 A1**
(43) Date of publication of application: **14.06.2006**
(21) Application number: 04106368.6
(22) Date of filing: 07.12.2004
(51) Int. Cl.: B60R 21/01, B60N 2/00

(54) **Child seat detection system**

(71) Applicant: IEE INTERNATIONAL ELECTRONICS & ENGINEERING S.A., 6468 Echternach (LU)
(72) Inventor: Orlewski, Pierre, 9021, ETTELBRUCK (LU)
(74) Representative: Beissel, Jean

(57) **Abstract**

A safety system for a vehicle comprises a first acquisition unit for acquiring first information relating to a child seat placed on a seat of a vehicle, a second acquisition unit for acquiring second information relating to the child seat. The first and second acquisition units are of different types. The safety system further comprises a controller (20) capable of evaluating first information and second information individually and a combination of first and second information for detecting misuse of the child seat and for generating a misuse signal indicative of the misuse.

## Description

### Introduction

The present invention relates to a safety system for a vehicle with focus on misuse of a child seat.

A report dated May 2003 on behalf of the National Highway Traffic Safety Administration of the USA (NHTSA) measured the current level of misuse of child restraint systems (CRS) among the general public *(Misuse of Child Restraints,* NHTSA, DOT HS 809 671). The authors report 72.6% of critical misuse as resulting from an extensive field survey covering several US states. Critical misuse includes measures like improper child seat direction, loose vehicle seat belt, age/fit inappropriateness, etc. In some isolated cases multiple and mutually independent critical misuses were reported. The survey revealed that 2.9% of infants and children in the weight class up to 20 Ib (9.1 kg) travelled without CRS, in the class of 20 to 39 Ib (9.1 to 17.7 kg) the amount was 13.6% and in the class of 40 to 59 Ib (17.7 to 26.8 kg) 58.3%. Overall, nearly 17% of the most vulnerable passengers were not properly restrained by a CRS, the only system conferring a sufficient amount of protection during a car accident or an emergency breaking.

For the case of forward-facing CRS, the survey lists the following misuse measures: loose harness straps, loose vehicle seat belt, age/fit inappropriateness, improper belt paths/slots of harness straps, improper use of locking clip to seat belt, improper vehicle seat belt path/slots, harness strap not used, unbuckled vehicle seat belt. The overall rate of infants up to 3 years travelling in a car without any restraint system was estimated to 10%.

Another issue related to child seat misuse has been pointed at in summer 2003, which was extremely hot in the US, Western Europe and Japan. Several casualties related to infants left behind in their child seat in a locked car in extreme temperatures were reported in the US. Lethal cases are also known from France. It is reasonable to believe that extremely low environmental temperatures may also have serious consequences for children left in a car.

### Object of the invention

The object of the present invention is to provide safety system for a vehicle able to detect child seat misuse.

### General description of the invention

This object is achieved by a safety system according to claim 1. Such a safety system for a vehicle comprises a first acquisition unit for acquiring first information relating to a child seat placed on a seat of a vehicle, a second acquisition unit for acquiring second information relating to the child seat. The first and second acquisition units are of different types. The safety system further comprises a controller capable of evaluating first information and second information individually and a combination of first and second information for detecting misuse of the child seat and for generating a misuse signal indicative of the misuse.

The safety system of the present invention is based on distributed sensing and checks the status of a child seat on a seat of the vehicle, and emits a misuse signal if any misuse is detected. The system uses acquisition units of different types in order to reliably identify situations, which represent a safety hazard to the child or infant on board. The acquisition units may be arranged in the car so that they can detect child seat misuse on the front passenger seat or on the rear bench. The two acquisition units may provide redundant and/or complementary information, which allows double-checking and ascertaining of deductions derived by the controller from this information.

Information acquisition may be based upon visual acquisition, thermal imaging, pressure sensing, child seat presence/orientation detection, seat belt buckle switch sensing, seat belt tension sensing or temperature sensing. Each acquisition unit thus provides a portion of information for determining a child seat misuse.

Visual information can be obtained by any imaging system, such as a 2D-camera or a 3D-camera, or a combination thereof. The imaging system is preferably arranged in the car so that its field of vision covers at least a part of the vehicle seat, upon which the child seat is located. The imaging system may be sensitive in an infrared spectral region and provide a thermal image of its field of vision. Alternatively, the imaging system can be equipped with an illumination source like an LED emitting in that spectral region and detect the backscattered light. With the imaging system, detection of orientation and type of the child seat is enabled, and it is further possible to recognise whether the child seat is empty or occupied. If occupied, an object and a child can be distinguished. Furthermore, estimations related to size and/or weight of a child or an infant in the child seat can be made. It is also possible to determine whether the seat belt and/or the CRS harness are in a correct position.

A two-dimensional image can be provided by a 2D-camera, which allows searching for specific shapes within the image. Thus the controller can identify different objects by means of adequate software. In addition to the possibilities of a 2D-camera, a 3D-camera can further provide distance information related to the detected objects.

An advantage of a double imaging system comprising 2D-camera and 3D camera would e.g. lie in reduced calculation time for the image provided by the 3D-camera, due to a possible reduction of 3D-image resolution or 3D-image size. The 2D-camera would provide an image allowing determining regions of interest, which can then be closer analysed by means of the 3D-camera.

Additionally, if no child seat is present, the occupant of the vehicle seat can be classified with regard to size and weight by means of an imaging system. With sufficiently elaborate systems, it is possible to detect pets and objects in the region covered by the field of view and determine whether they could constitute a risk in case of an accident or emergency breaking.

In order to detect the presence and/or the orientation of a child seat a presence/orientation detector can be used. Such a detector comprises an antenna for transmitting an electromagnetic field and an antenna for receiving an electromagnetic field. A transponder or a resonator arranged on a child seat changes the electromagnetic field detected by the receiving antenna in a characteristic way, which allows determining whether a child seat is present on the seat. The orientation of the child seat may additionally be detected. Depending upon the type, the child seat can be front facing, rear facing or facing any other direction; it is however important to know whether the child seat is suitable for the specific facing direction. The child seat presence/orientation detector may therefore be able to detect the type of a child seat, by means of said resonator or transponder like e.g. a radio-frequency identification chip arranged in a portion of the child seat.

Today's state of the art child seat presence/orientation detection (CPOD) technology allows to handle 5 tags by means of the resonators (1. rear facing child seat RFCS, 2. forward facing child seat FFCS, 3. convertible child seat, 4&5: currently not used). The future CPOD generation will allow carrying up to 15 tags. The additionally tagged characteristics may comprise one or more of the following:
□ child restraint seat group (4 CRS groups (from 0 to 3) defining max. child corpulence or weight: in narrow, critical cases, CRS - group / child size inappropriateness may be detected with camera (i.e. CRS Group 3 (22-36kg) and few months old infant (requiring normally group 0 or 1)
□ minimal belt tension ensuring a correct fixation with cars seat belt (typically varying from CRS brand to other): by comparing dedicated tag with actual reading from a belt tension sensor one may detect whether the CRS is safely attached or not.
□ IsoFix CRS tag: will overwrite seat belt reminder (SBR) signal and inhibit "false positive" warning
□ booster seat tag: to indicate, that this CRS uses the vehicle seat belt to attach the CRS and the child: minimum belt tension is required to ensure correct protection.
□ in all CRS with exception of Car Beds and boosters, a child needs to be belted with a CRS harness. This harness (4 points belts) are easily detectable by 2D camera (contours or edge detection). In several "real life" cases, a child may slide down the left or right arm loops without unbelting the buckle: this can be detected by means of a 2D camera. It may be, that some very particular CRS models require the child to be attached by means of the vehicle seat belt and not by means of a specific harness - in such case, a "harness free CRS" tag should be encoded.

An acquisition unit may also comprise a pressure sensor. Such a pressure sensor may have a plurality of individual pressure detectors, which are interconnected in an array, so as to provide a pressure pattern acting on at least the relevant parts of the seating surface. Thus the pressure sensor may be able to detect a pressure profile generated by a child seat. In order to detect the pressure profile on the seating surface of a vehicle seat, the pressure sensor is preferably arranged in a suitable location of the seating portion of the seat. The controller can estimate the weight of an occupant or a child in the seat with the data provided by the pressure sensor.

Different types of pressure sensors may however be used in the present invention. One could e.g. integrate an individual pressure sensor or a plurality thereof into the child seat in order to provide information related to the presence of a child in the child seat to the controller. Furthermore, this pressure sensor could measure the weight of the child placed in the seat. Thus the controller would be enabled to decide whether the child seat is appropriate to the child size or child weight.

There are particular sensors integrating child seat presence/orientation detecting function and pressure sensing function in a single device, which can be particularly convenient for the present invention.

Another type of acquisition unit would be a seat belt buckle switch sensor determining whether the seat belt is correctly buckled or a seat belt tension sensor detecting the seat belt tension.

It is further possible to acquire internal or external car temperature by a thermal sensor. A thermal sensor can also be used to detect the presence of a child in the child seat.

In order to detect child seat misuse, the first acquisition unit preferably comprises an imaging system, while the second acquisition unit is chosen from a group comprising child seat presence/orientation detector, pressure sensor, a combination of child seat presence/detector and pressure sensor, seat belt buckle sensor and seat belt tension sensor.

Child seat misuse is detected upon information provided by both acquisition units, where the first acquisition unit can comprise a 2D-camera, a 3D-camera or a combination thereof.

Having an imaging system as first and a child presence/orientation detector as second acquisition unit, the controller can determine misuses such as improper child seat orientation according to child seat type, age/fit inappropriateness, loose child seat harness, improper seat belt path, faulty child seat position, etc.

The combination of imaging system and pressure sensor allows e.g. determining age/fit inappropriateness, improper child seat position and misalignment of the child seat.

Detection of misuse can be improved by using an imaging system and a combination of pressure sensor and child seat presence/orientation detector.

The imaging system combined with a seat belt tension sensor allows detecting a loose seat belt, improper seat belt path, etc.

According to a further embodiment of the invention, the safety system comprises at least one further acquisition unit which may be e.g. imaging unit, child seat presence/orientation detector, pressure sensor, seat belt buckle sensor, seat belt tension sensor and thermal sensor. The controller is then preferably capable of evaluating information provided by the at least one further acquisition unit individually and in combination with the first and second information, thereby increasing the amount of information taken into account for evaluating the safety situation related to a child seat.

By having more than two acquisition units acquiring complementary or redundant information, the controller can assess the situation more accurately. Several other sensors can also be connected to the controller in order to vary its response as a function of vehicle condition, e.g. a door lock sensor or an engine on/off sensor.

In order to inform the driver about child seat misuse, the safety system can further comprise a warning device, which is activatable by the controller. The warning device can emit any kind of warning signal, e.g. an acoustic signal, a visual or a tactile signal, inside or outside the car.

The skilled person will appreciate that in a possible embodiment, a seat belt retractor may be connected to the controller, the seat belt retractor being configured for applying an amount of seat belt tension based on the misuse signal emitted by the controller. Depending on the child seat, an optimal amount of tension can be applied to the seat belt by means of the retractor in order to assure appropriate restraint to the child seat in case of an accident or an emergency breaking.

According to a preferred embodiment, the safety system comprises a thermal sensor and a window lifter connected to the controller: The window lifter is configured so as to open a vehicle window in response to the misuse signal. If the controller detects a child in the car and extremely high temperatures, one or more windows of the car can be opened automatically, in order to allow airflow and give access to the vehicle e.g. if it is parked. A warning device arranged outside the passenger compartment can draw the attention of persons outside the car to the child inside the car.

### Detailed description with respect to the figures

The present invention will be more apparent from the following description of a not limiting embodiment with reference to the attached drawings, wherein
Fig. 1: shows a block diagram of a preferred embodiment of a safety system for a vehicle;
Fig. 2: shows a schematic of a preferred embodiment of a safety system for a vehicle.

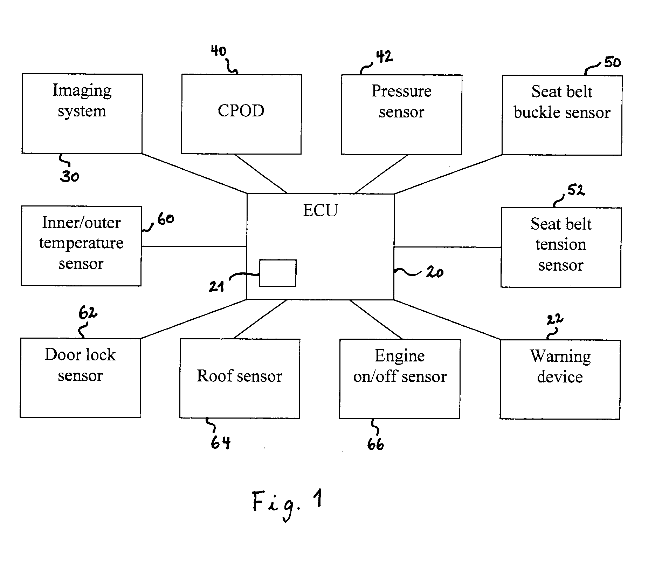

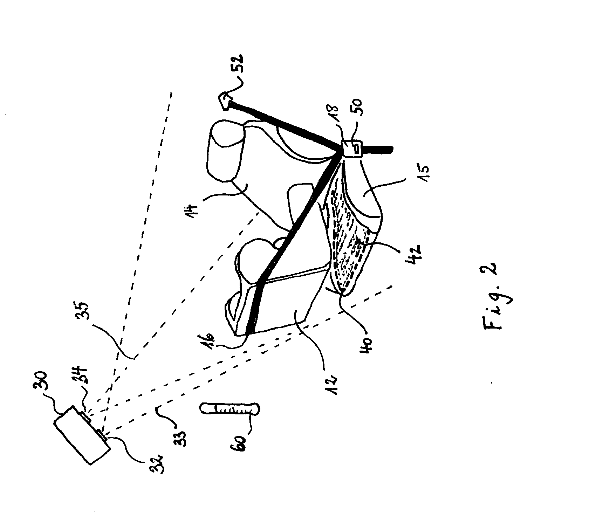

Fig. 1 generally shows a block diagram of a safety system 10 for detecting misuse of a child seat 12 arranged on a passenger seat 14 (see fig. 2). The safety system 10 comprises an electronic control unit 20, for evaluating data provided by connected sensors, in order to detect child seat misuse. The electronic control unit 20 comprises a database 21 containing in particular manufacturer information about child seats regarding type, identification tag, specification, etc. Thus the data provided by the sensors can be compared to the specifications of the manufacturers stored in memory. Upon detection of child seat misuse, the electronic control unit 20 informs the driver by activating a warning device 22.

Image information is provided to the electronic control unit 20 by an imaging system 30. The safety system 10 further comprises a child seat presence/orientation detector 40 and a pressure sensor 42. A seat belt buckle sensor 50 provides the electronic controller unit 20 with binary information related to the buckling status of the seat belt 16. The tension of the seat belt 16 is measured by a seat belt tension sensor 52. Further data may be collected by a temperature sensor 60, a door lock sensor 62, a roof sensor 64, which detects whether the car roof is open or closed, and an engine sensor 66, which detects whether the engine is operating or not.

A schematic view of a child seat 12 placed on a passenger seat 14 is shown in fig. 2. The imaging system 30 comprises a 2D CMOS or CCD camera 32 and a 3D-camera 34 arranged so that their respective fields of view 33, 35 cover the passenger seat 14. Based on the picture provided by the 2D-camera 32, the electronic control unit 20 determines regions of interest to be analysed with the 3D-camera 34. Thus, within a region containing e.g. the child seat 12, distances are measured and accurate information about child seat position is obtained.

By means of the imaging system 30, it is detected whether the child seat 12 is empty or occupied. An object can be distinguished from a child and an infant in a car bed can also be detected if present. The electronic control unit can also determine whether the child seat harness or the seat belt 16 is in the right position, based upon image information provided by the imaging system 30. It can further be ascertained that the child is correctly attached to the child seat.

Furthermore, based on the image information provided by the imag ing system 30, the electronic control unit 20 can determine the size and the corpulence of a child in the child seat 12 or of an occupant of the passenger seat 14. It is further possible to detect a pet in the fields of vision 33, 35 of the 2D-camera 32 and the 3D-camera 34.

A child seat presence/orientation detector 40 preferably integrated into a pressure-sensing mat 42 is arranged in the seating portion 15 of the passenger seat 14, underneath the child seat 12. The child seat presence/orientation detector 40 can determine presence, orientation and type of the child seat 12. It can further be detected if the child seat is positioned correctly relative to the passenger seat 14.

The pressure sensing mat 42 records a pressure profile, which can be compared with stored pressure profiles of current child seat types in order to identify the child seat type in an independent way.

The rear facing child seat 12 is secured to the passenger seat 14 by the seat belt 16, which is fixed by the seat belt buckle 18. The seat belt buckle 18 comprises a seat belt buckle sensor 50, which provides binary information related to the seat belt buckle status to the electronic control unit 20. The seat belt tension is measured with a seat belt tension sensor. If the electronic control unit 20 detects an unbuckled or loose seat belt 16, an alarm signal can be generated by the warning device 22.

A thermal sensor 60 measures the internal car temperature, which allows giving an alarm if high or low temperature constitutes a risk for an infant or a child in the car.

The present embodiment of the invention thus addresses several misuse scenarios, such as CRS-type/direction of installation incompatibility, shifted or rotated child seat position, seat belt not cinched, too low seat belt tension, CRS-specification/child weight inappropriateness, faulty harness position, etc. The safety system provides an alarm signal if an infant or a child is left behind in a closed or a convertible car and if temperature is in a critical range.

## Claims

1. Safety system for a vehicle comprising
a first acquisition unit for acquiring first information relating to a child seat placed on a seat of a vehicle;
a second acquisition unit for acquiring second information relating to said child seat, said first and second acquisition units being of different types;
a controller capable of evaluating said first information and said second information individually and for evaluating a combination of said first and second information for detecting misuse of said child seat and for generating a misuse signal indicative of said misuse.

2. Safety system for a vehicle according to claim 1, said first acquisition unit comprising an imaging system, said second acquisition unit being chosen from a group comprising child seat presence/orientation detector, pressure sensor, a combination of child seat presence/detector and pressure sensor, seat belt buckle sensor and seat belt tension sensor.

3. Safety system for a vehicle according to claim 1 or 2, comprising at least one further acquisition unit chosen from a group comprising imaging unit, child seat presence/orientation detector, pressure sensor, seat belt buckle sensor, seat belt tension sensor and thermal sensor, said controller being capable of evaluating information provided by said at least one further acquisition unit individually and in combination with said first and second information.

4. Safety system for a vehicle according to any one of the preceding claims, comprising a warning device, which is activatable by said controller.

5. Safety system for a vehicle according to any one of the preceding claims, wherein a seat belt retractor is connected to said controller, said seat belt retractor being configured for applying an amount of seat belt tension based on said misuse signal.

6. Safety system for a vehicle according to claim 4, said safety system comprising a thermal sensor and wherein a window lifter is connected to said controller, said window lifter being configured so as to open a vehicle window in response to said misuse signal.
